# DEMANDE DE BREVET EUROPEEN

(11) **EP 3 076 164 A1**
(43) Date de publication de la demande: **05.10.2016**
(21) Numéro de dépôt: 15248024.0
(22) Date de dépôt: 03.04.2015
(51) Int. Cl.: G01N 21/896, G01N 21/958

(54) **PROCÉDÉ DE CONTRÔLE DE VERRE PLAT**

(71) Demandeur: AGC Glass Europe, 1348 Louvain-la-Neuve (BE)
(72) Inventeur: Ayoub, Patrick, 1348 Louvain-La-Neuve (BE); Dado, Carmelo, 7110 Houdeng-Goegnies (BE)
(74) Mandataire: Le Vaguerèse, Sylvain Jacques

(57) **Abrégé**

L'invention concerne un procédé de détection de défauts d'indice de réfraction de type «cordes» dans le verre plat produit sur «float» dans lequel un faisceau laser est dirigé sur le verre, une image de la source laser en transmission ou en réflexion, est reçue sur un détecteur, cette image en présence de défaut comporte une partie centrale correspondant à une verre sans défaut et une partie diffractée encadrant la partie centrale, le détecteur étant réglé sur la partie diffractée.

## Description

L'invention concerne le contrôle de qualité de verre plat.

La production de verre plat par les techniques traditionnelles «float» peut conduire à la présence de défauts variés qu'il convient de détecter en vue de l'élimination des produits jugés défectueux et de correction de la production pour éviter la présence de ces défauts.

Les défauts les plus usuels de la production continue de verre sur «float» peuvent être ponctuels comme la présence de bulles ou d'inclusion de particules infondues. D'autres défauts sont liés plus directement aux grandeurs optiques des feuilles de verre. Un de ces défauts est la présence d'irrégularités de géométrie, notamment de surface et particulièrement de faibles ondulations, qui introduisent des distorsions d'image. Les caractéristiques dimensionnelles, de quelques centimètres à quelques dizaine s de centimètres dans le sens transversal à la progression du ruban de verre «float» de ces irrégularités conduisent le plus souvent à la mise en place d'un contrôle sur la ligne de production par des techniques telles que l'ombroscopie. Selon ces techniques l'image d'un motif régulier au travers de la feuille est observée et comparée à l'image obtenue en l'absence de la feuille ou en présence d'une feuille sans défaut.

Les feuilles de verre peuvent encore présenter d'autres types de défaut ayant une influence sur la qualité optique et en particulier ceux connus sous le nom de «reamknot» ou «cordes». Il s'agit de variations locales de la composition qui se traduisent par des variations d'indice de réfraction. Ces variations sont liées à des insuffisances d'homogénéisation de la composition du verre fondu. Dans les feuilles de verre «float» ces défauts sont très discrets et difficilement décelables au contrôle visuel en raison notamment de leurs dimensions transversales et de ce que les variations d'indice qu'ils présentent sont limitées, pour certaines de moins de 10% de la valeur de l'indice du verre. Ils sont cependant considérés comme inacceptables pour certains clients. C'est le cas notamment des constructeurs automobiles lorsqu'il s'agit particulièrement de la mise en oeuvre de ces feuilles dans des pare-brise.

Compte tenu de ces exigences il est nécessaire de détecter la présence éventuelle de ces «cordes» dans le verre, et ceci le plus tôt possible dans le processus conduisant au vitrage final.

Un objet de l'invention est de proposer un procédé permettant de détecter la présence de ces «cordes» dès la ligne de production pour permettre l'élimination des parties défectueuses, et aussi pour éventuellement entreprendre les mesures correctives permettant de réduire l'incidence de ces défauts.

Un but de l'invention est en particulier de procéder à ce contrôle en continu sur la totalité du verre produit, sans ralentir le processus de production et par des moyens robustes compatibles avec leur implantation sur ligne. Les moyens doivent en particulier fonctionner de manière fiable dans des conditions notamment de température typiques de ces installations.

Les défauts considérés ont la particularité de s'étendre sensiblement dans le sens de progression du verre sur des longueurs de quelques centimètres à plusieurs mètres. Leur «longueur» permet notamment comme indiqué plus loin d'effectuer une identification les distinguant de défauts ponctuels modifiant aussi les caractéristiques optiques.

Dans la direction transversale au sens de progression du verre ces défauts peuvent être de très petites dimensions. Ces dimensions sont au plus à la limite de la détection par un contrôle visuel. Le procédé et le dispositif selon l'invention doivent en particulier permettre de détecter des défauts dont les dimensions transversales sont inférieures peuvent descendre à moins de 1 µm. Le domaine des dimensions transversales le plus important compte tenu des exigences des utilisateurs se situe entre 1 et 250 µm, le plus usuellement entre 1 et 100 µm et plus particulièrement entre 1 et 20 µm. En-deçà de 1 µm, le défaut n'est généralement plus considéré comme tel. Les distorsions optiques deviennent imperceptibles mêmes pour les vitrages de type automobile. Au-delà de 25 de ces 0 µm les défauts sont très largement détectable visuellement. Néanmoins les moyens proposés selon l'invention sont également utilisables pour le contrôle automatisé envisagé de défauts de cette importance.

Des techniques ont été proposées antérieurement pour ce type de détermination mais pour l'essentiel elles opèrent sur des produits individualisés et de manière discontinue, notamment des vitrages préalablement découpés éventuellement même mis en forme. Ces techniques peuvent être très précises mais induisent des coûts élevés et leur complexité relative les rend impropres à leur mise en place sur ligne notamment pour des raisons de maintenance.

L'invention propose un procédé capable d'être utilisé en continu directement sur une ligne de production de verre plat traditionnelle de type «float» et permettant dans des conditions économiques et rapide le contrôle de la totalité de la surface du ruban de verre.

Le principe de la technique consiste en l'illumination de la feuille de verre au moyen d'un rayon laser de dimension limitée, et en l'observation en transmission ou en réflexion d'une image de la source lumineuse. En l'absence de défaut l'image est bien définie. En présence d'un défaut d'indice de réfraction, le rayon est en partie diffracté et l'image comporte une zone «centrale» très lumineuse qui correspond à celle observée en l'absence de défaut, cette zone étant environnée par un halo lumineux dont l'intensité décroit de puis cette zone centrale. C'est l'observation de l'intensité lumineuse autour de l'image principale, caractéristique de la présence du défaut, qui est captée pour le contrôle.

Si les dimensions du faisceau laser peuvent varier, il est avantageux de choisir ces dimensions de manière répondre le plus efficacement possible et en particulier en fonction des dimensions transversales des cordes que l'on doit contrôler. Le faisceau par l'interposition d'une lentille appropriée sous forme allongée de telle sorte qu'il permette le balayage du ruban de verre sur une certaine longueur dans le sens de progression du verre. Cette longueur est avantageusement de l'ordre de de quelques centimètres à quelques dizaines de centimètres.

Le faisceau sous forme d'un trait présente une largeur qui tient compte de considérations pratiques. Un faisceau très «concentré» et donc de faible largeur par rapport à celle des défauts observés, accroît la part de lumière diffractée pour une intensité lumineuse donnée. Ceci pourrait conduire à réduire le plus possible la largeur du faisceau focalisé. En pratique comme décrit dans la suite, la mise en oeuvre industrielle nécessite de procéder à un balayage de la feuille de verre au cours de la progression de celle-ci. Pour cette raison la géométrie optique est modifiée dans ce mouvement et il est nécessaire de disposer d'une certaine profondeur de champ pour maintenir une variation limitée du signal quel que soit la position des défauts sur l'étendue de la largeur balayée par le faisceau. Pour maintenir cette profondeur de champ il est préférable de conserver une largeur suffisante. En pratique, fonction des choix de l'étendue du balayage et donc du nombre de faisceaux mis en oeuvre simultanément pour couvrir la totalité de la largeur de la feuille de verre, la dimension transversale du faisceau est de préférence d'au moins 50 µm et de façon particulièrement préférée d'au moins 100 µm. Il va de soi que la largeur doit rester limitée pour obtenir un faisceau suffisamment intense. De préférence celle-ci n'est pas supérieure à 400 µm, et de manière particulièrement préférée pas supérieure à 200 µm.

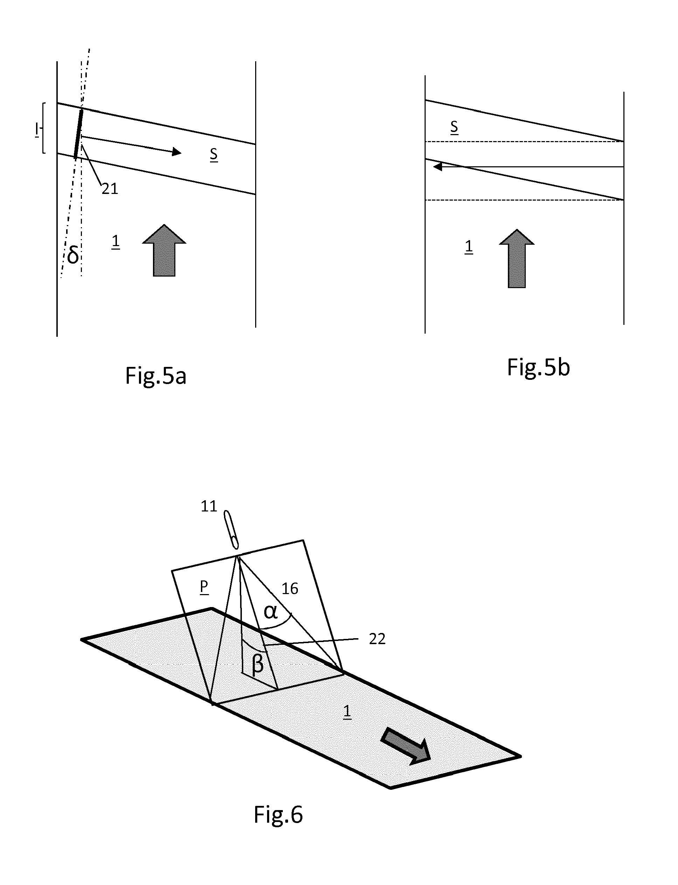

L'incidence du faisceau par rapport à la feuille de verre conditionne aussi le signal analysé. Dans le plan perpendiculaire à la feuille de verre et suivant la direction de progression du verre (voir la figure 6 jointe) le faisceau est de préférence voisin de la normale à cette feuille mais ne se confond pas avec celle-ci pour éviter la réflexion directe. Un écart limité est donc préféré. Celui-ci est avantageusement tel que l'angle (β sur la figure 6) entre le faisceau et la normale se situe entre 5 et 25°, et de préférence de 8 à 20°.

Le faisceau est dirigé sur la feuille de verre selon une incidence variable en fonction du balayage d'une certaine largeur de la feuille de verre. Cette variation compte tenu de la profondeur de champ correspondant à la focalisation du faisceau fait que l'intensité de la réponse pour un même défaut n'est pas constante. Cette variation dans l'intensité de la réponse n'est pas préjudiciable pour autant qu'elle reste dans des proportions qui n'excèdent pas un certain seuil tenant compte de la profondeur de champ. La mise en oeuvre de l'invention n'est pas destinée à une mesure quantitative de la variation d'indice du défaut, mais seulement à la détection de la présence ou non de tels défauts. Pour cette raison une variation même significative du signal n'est pas un obstacle à cette mise en oeuvre. Il reste que la sensibilité des moyens utilisés est d'autant mieux assurée que le signal n'est pas trop dépendant de l'incidence du faisceau. De préférence cette incidence dans le plan balayé par le faisceau reste inférieure à 30° (angle α de la figure 6), et de façon particulièrement préférée inférieure à 20°.

La puissance du faisceau laser est fonction de la sensibilité des moyens de détection mis en oeuvre et de la géométrie générale du dispositif optique. Plus grande est cette puissance, mieux la détection peut être assurée de faibles défauts. La puissance du faisceau permet aussi d'assurer une meilleure distinction entre les signaux produits par les défauts d'une part et le bruit de fond indépendant de ces défauts qui sont le fait notamment de turbulences dans l'atmosphère au voisinage de la feuille ou de poussières inévitables en milieu industriel. Une puissance très élevée du faisceau conduit à écarter le récepteur par rapport à l'image principale pour les raisons décrites plus loin. Il est préférable que cette distance ne soit pas trop importante pour la commodité de l'installation. De même les lasers très puissants sont plus rapidement altérés à l'usage. Dans la pratique pour garantir une bonne fiabilité on utilise avantageusement des générateurs lasers de quelques dizaines à quelques centaines de milliwatts.

Le rayon laser comme indiqué est en partie diffracté au passage sur la corde. C'est l'observation de l'image de cette lumière diffractée qui constitue le signal observé. L'image en question est celle reçue en transmission ou en réflexion sur des détecteurs comprenant des cellules photosensibles. L'observation est faite volontairement en dehors de l'image principale correspondant à une transmission sans défaut de la fraction du faisceau qui n'est pas diffractée. Le signal est ainsi entièrement dû à la présence du défaut. La luminosité de l'image diffractée décroît rapidement en s'éloignant de celle non diffractée. La partie de l'image diffractée observée est choisie à distance de l'image principale pour ne pas masquer la lumière diffractée, mais pas trop écartée de celle-ci pour conserver une intensité suffisante assurant un rapport signal/bruit élevé.

Le contrôle continu de l'ensemble de la surface du ruban de verre est assuré avantageusement au moyen d'un nombre limité de dispositifs tels que décrits précédemment. De préférence le balayage dans la largeur de la feuille est obtenu, le dispositif émission/réception étant fixe, en animant le rayon laser d'un mouvement de va-et-vient au moyen de miroirs oscillants. Les rubans de verre des installations les plus usuelles sont d'une largeur dépassant 3m. La couverture de toute la largeur peut donc conduire à associer plusieurs unités de détection chacune assurant le contrôle d'une fraction de la largeur de ce ruban.

L'invention est décrite de manière détaillée dans la suite en faisant référence aux figures dans lesquelles :
- la figure 1 est une représentation schématique du principe de mise en évidence de défauts selon l'invention ;
- la figure 2 représente une image photographique reçue sur un détecteur, image correspondant à la présence d'un défaut ;
- la figure 3 est une représentation de l'intensité des signaux reçus respectivement en l'absence et en présence de défaut ;
- la figure 4 est une représentation schématique d'un ensemble de détection selon l'invention ;
- les figures 5a et 5b illustrent une mise en oeuvre de la détection complète des défauts d'une feuille directement sur un verre défilant sous les moyens de détection ;
- la figure 6 est un schéma montrant l'étendue du balayage du faisceau sur la feuille contrôlée.

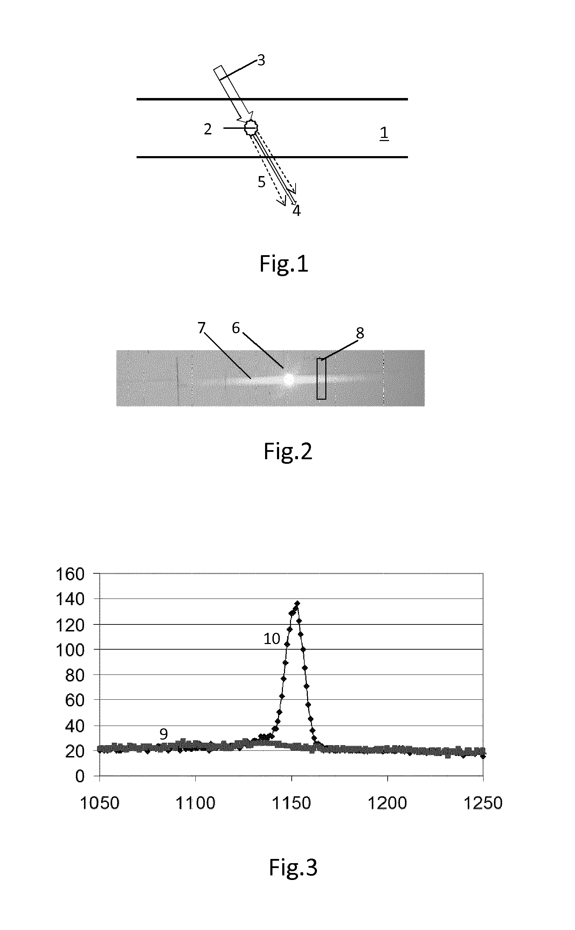

Dans son principe représenté à la figure 1, la détection des cordes dans une feuille de verre 1, est basée sur la différence des propriétés optiques induites par ce défaut 2, lorsque cette feuille 1 est exposée à un rayon lumineux 3 suffisamment intense. La présence d'une inhomogénéité d'indice de réfraction modifie la caractéristique du rayon. En particulier au passage dans le défaut 2, une fraction du faisceau est diffractée dans des directions 5 qui s'écartent de la direction 4 correspondant au passage dans le verre sans défaut. C'est la présence de cette fraction qui suit un chemin optique modifié qui est le signal de la présence du défaut 2.

La figure 2, photographie de l'image du faisceau lumineux après son passage dans le verre montre d'une part un point central 6 très lumineux aux contours relativement bien définis, point qui correspond à l'image qui serait celle du faisceau en l'absence de défaut, et de part et d'autre de ce point central 6 des images étirées 7 correspondant à la fraction du faisceau déviée de son trajet par la variation irrégulière de l'indice de réfraction constituant le défaut. La représentation de cette image, dans le dispositif utilisé dont la description est détaillée plus loin, est sensiblement à l'échelle 2.

A la figure 2 le rectangle 8 représente la zone observée par le détecteur composé d'un ensemble linéaire de cellules photoélectriques. Dans la pratique il s'agit par exemple d'une caméra CCD, ou CMOS, dont la sensibilité est choisie en fonction de l'intensité et des dimensions de l'image produite. La position de détection 8 est située à distance du point central pour améliorer la sensibilité de la mesure. Comme il apparait sur cette photographie l'intensité de la lumière déviée décroît depuis le point central 6. La position d'observation est donc choisie à distance du point central mais en un point où, à l'expérience, l'intensité du faisceau dévié reste suffisante compte tenu des conditions de mise en oeuvre.

L'intensité des parties 7 de l'image est fonction non seulement des caractéristiques du faisceau incident mais aussi du défaut lui-même. Interviennent dans ce sens d'une part la variation relative de l'indice de réfraction mais aussi les dimensions de ce défaut. Dans la pratique il est préférable pour répondre aux exigences des clients, notamment ceux du domaine automobile, de choisir les conditions qui permettent de détecter les défauts les plus ténus considérés par ces clients comme inacceptables. Les variations d'indice habituellement observées, de l'ordre le plus souvent de quelques centièmes pour un indice du verre de l'ordre de 1,52, sont telles que les dimensions de ces défauts considérées comme «gênantes» ne sont pas normalement inférieures au micromètre. En conséquence le procédé et le dispositif sont choisis pour permettre la mise en évidence de ces défauts les plus ténus, étant bien entendu que des défauts plus importants, notamment de l'ordre de 3 ou 5µm, seront plus aisément détectés. Cette sensibilité est supérieure à ce qui est observable à l'inspection visuelle qui, dans les meilleures conditions, ne dépasse pas les défauts de l'ordre de 10 µm.

La figure 3 est une illustration de la sensibilité de la détection par une caméra CCD. En abscisse figurent les pixels de la caméra sensibilisés par la luminosité de l'image, et en ordonnée l'intensité du faisceau image reçu par la caméra dans une échelle arbitraire.

En l'absence de défaut, l'intensité qui constitue une manière de «bruit de fond» correspondant aux points constituant l'ensemble, 9 est très faible et sensiblement constante. Ce bruit de fond correspond par exemple à la lumière ambiante et à ses variations inévitables induites par le cheminement dans l'air comportant quelques turbulences propres à l'installation dans un environnement de production industrielle. En présence d'un défaut de type «corde» l'intensité, représentée par l'ensemble des points 10, croît de manière très sensible. De manière remarquable le rapport signal/bruit peut être très important montrant les possibilités du procédé selon l'invention pour détecter des défauts de très petites dimensions.

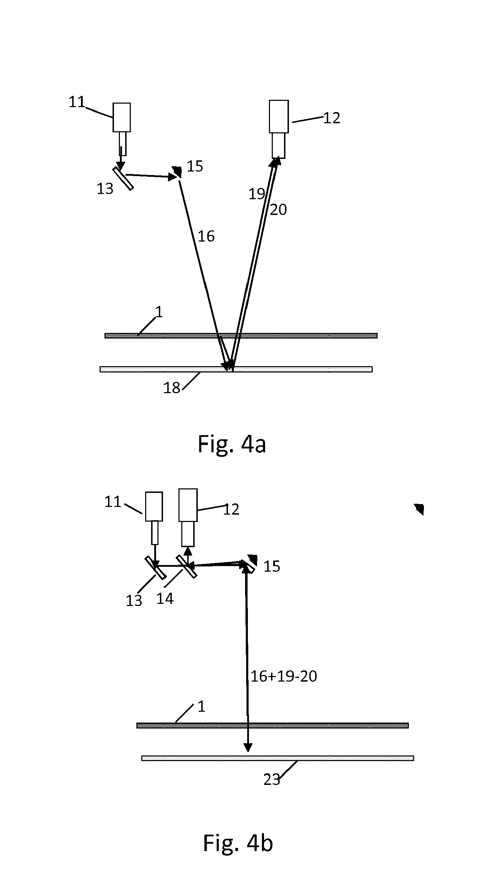

Un mode de réalisation d'un dispositif selon l'invention permettant la détection des défauts de type «corde» est schématisé à la figure 4a. Il comprend une source laser 11dont le faisceau, réfléchi sur un premier miroir 13, est dirigé sur un miroir oscillant 15. Le faisceau est focalisé sur la feuille de verre 1 sous forme d'un trait comme indiqué plus haut. Le faisceau est réfléchi sur un miroir 18 situé sous la feuille de verre 1 sous forme d'un faisceau 19. Une caméra photo sensible 12 complète le dispositif.

En présence d'un défaut de type corde le faisceau initial 16 dont les dimensions sont très supérieures à la largeur du défaut, est en partie diffracté. Il comporte une partie centrale de luminosité peu différente de celle du faisceau incident, correspondant au faisceau tel qu'il apparaît en l'absence de défaut. Cette partie réfléchie est représentée en 19. La partie diffractée qui s'écarte légèrement du trajet du faisceau 19 est représentée en 20.

Le faisceau en partie diffracté est reçu sur un détecteur 12 composé par exemple d'une caméra CCD.

La figure 4a ne présente pas les éléments d'optique associés qui déterminent la géométrie du faisceau initial, sa focalisation sur la feuille de verre et la géométrie de l'image reçue par le détecteur. Sur cette figure 4a, les cheminements sont exagérément distincts les uns des autres pour en faciliter l'illustration. En pratique dans les installations industrielles il est préféré de regrouper dans un même boîtier protecteur tous les éléments d'émission et de réception et les optiques associées. Dans ces conditions, illustrées de manière schématique à la figure 4b, Les faisceaux incident 16 et réfléchis 19-20 au moyen d'un rétro-réflecteur 23 sont très proches l'un de l'autre. Un miroir semi transparent 14 permet le passage du faisceau incident 16 et renvoie le faisceau réfléchi en direction du détecteur 12.

Pour assurer une détection sur l'ensemble d'une feuille de verre «float» au cours de la progression de celle-ci qui se déplace à la vitesse de plusieurs mètres par minute, le procédé selon l'invention est avantageusement animé de la façon représentée aux figures 5a et 5b. Ces schémas figurent par une flèche, la progression de la feuille de verre 1.

Le faisceau laser 21 se présente sous forme linéaire sur la feuille de verre. Son déplacement dans la largeur de la feuille en progression conduit à balayer une partie de la surface S déterminée par la longueur l (pratiquement à celle du faisceau) et la largeur du mouvement de celui-ci. La vitesse de balayage et le retour pratiquement instantané illustré par la bande représentée en pointillé à la figure 5b, permet de couvrir de proche en proche la totalité de la feuille.

Pour assurer cette couverture de l'ensemble de la surface de la feuille compte tenu des contraintes dimensionnelles relatives aux dispositions optiques pour chaque faisceau, dont il est question ci-dessous, la largeur effective des feuilles «float» usuels nécessite de recourir à un fractionnement de la détection dans la largeur de la feuille. Plusieurs dispositifs sont disposés sur cette largeur chacun permettant le contrôle d'une partie de la feuille, les zones contrôlées comportant un recouvrement partiel sur leurs bords. Pour un «float» de trois mètres et plus par exemple, la totalité de la largeur sera couverte par 4 dispositifs de même type.

La figure 5a montre une disposition préférée du faisceau incident 21 par rapport à la progression de la feuille 1. Le faisceau 21 est légèrement incliné d'un angle δ. Les cordes, comme indiqué précédemment se présentent essentiellement allongées dans la direction de progression du verre. Pour assurer la formation d'un signal commodément décelable selon les modalités indiquées précédemment, il est préférable de faire en sorte que la direction du faisceau soit distincte de celle de la corde, d'où le choix de l'inclinaison du faisceau. Néanmoins pour ne pas réduire la surface balayée cette inclinaison est de préférence peu marquée. L'angle δ est avantageusement de l'ordre de 5 à 20°.

Le mouvement de balayage de la feuille de verre avec un nombre limité de dispositifs permet un contrôle de la totalité de la surface comme indiqué ci-dessus. Ce mouvement introduit néanmoins des modifications des caractéristiques géométriques des faisceaux concernés fonction de leur incidence sur la feuille de verre. La figure 6 illustre schématiquement cette question.

Le faisceau incident 16 oscille dans un plan P de part et d'autre d'une position médiane 22 dont l'incidence par rapport à la feuille 1 est la plus voisine de la normale à cette feuille. De part et d'autre l'incidence est d'autant moins forte par rapport à la normale que le rayon s'écarte davantage de cette position médiane 22. Ces variations ont nécessairement des répercussions sur les images reçues, notamment sur leur focalisation et leur intensité lumineuse.

Comme indiqué précédemment, le procédé selon l'invention n'a pas pour but une quantification des défauts observés. Son rôle est de déceler les défauts dont les caractéristiques, notamment dimensionnelles dépassent certains seuils. Pour ces raisons pour un même défaut une certaine variation des signaux reçus n'est pas significativement gênante pour autant qu'elle demeure dans des limites préétablies. En pratique selon l'invention, une limitation de ces variations liées à la géométrie du système et au balayage par le faisceau est obtenue en limitant l'étendue de ce balayage. De façon préférée l'angle de balayage α entre les positions extrêmes du faisceau dans ses oscillations et la position médiane 22 est de préférence au plus égale à 30°. Cette limitation détermine bien évidemment la surface balayée et par suite le nombre de dispositifs nécessaire pour couvrir la totalité de la feuille.

## Revendications

1. Procédé de détection de défauts d'indice de réfraction de type «cordes» dans le verre plat produit sur «float» dans lequel un faisceau laser est dirigé sur le verre, une image de la source laser en transmission ou en réflexion, est reçue sur un détecteur, cette image en présence de défaut comportant une partie centrale correspondant à une verre sans défaut et une partie diffractée encadrant la partie centrale, le détecteur étant réglé sur la partie diffractée.

2. Procédé selon la revendication 1 dans lequel les paramètres optiques du faisceau utilisé sont choisis pour optimiser la détection de cordes dont les dimensions transversales sont comprises entre 1 et 250 µm, de préférence entre 1 et 100 µm et de façon particulièrement préférée entre 1 et 20 µm.

3. Procédé selon la revendication l'une des revendications précédentes dans lequel d'au moins 50 µm et de préférence d'au moins 100 µm.

4. Procédé selon la revendication 3 dans lequel au point de focalisation le faisceau laser présente une dimension transversale qui n'est pas supérieure à 400 µm et de préférence pas supérieure à 200 µm.

5. Procédé selon l'une des revendications précédente dans lequel le faisceau laser est allongé sous forme linéaire, la direction de cette ligne étant légèrement inclinée par rapport à celle de progression du verre, l'angle (δ) entre les deux directions étant de préférence compris entre 5 et 20°.

6. Procédé selon l'une des revendications précédentes dans lequel le faisceau laser est conduit à balayer une fraction au moins de la largeur de la feuille de verre.

7. Procédé selon la revendication 6 dans lequel dans le plan de balayage du faisceau laser le faisceau laser fait au plus un angle (α) de 30° par rapport à sa position correspondant à sa plus grande incidence sur la feuille de verre.

8. Procédé selon l'une quelconque des revendications précédentes dans lequel le mouvement du faisceau laser est effectué par réflexion de ce faisceau sur un miroir oscillant.

9. Procédé selon la revendication précédente dans lequel l'image est reçue sur un détecteur comprenant un ensemble linéaire de cellules photosensibles.

10. Procédé la revendication 8 dans lequel plusieurs faisceaux laser sont disposés en ligne transversalement au ruban de verre «float» chacun balayant une fraction de la largeur du ruban de verre, l'ensemble des faisceaux recouvrant la totalité de cette largeur.

11. Procédé selon la revendication 8 et la revendication 10 dans lequel à chaque faisceau est associé un dispositif de détection comprenant un ensemble linéaire de cellules photosensibles.

12. Procédé selon les revendications 5 et 8 à 11 dans lequel la fréquence du mouvement du(es) faisceau(x) conjuguée à la longueur du(es) faisceau(x), est réglée de manière à balayer la totalité de la surface du verre progressant.

13. Procédé selon l'une des revendications précédentes dans lequel la source du faisceau laser et l'ensemble de détection sont disposés du même côté de la feuille de verre, l'image du faisceau traversant la feuille de verre étant réfléchie sur un miroir ou un rétro-réflecteur placé sous cette feuille.
